# FASCICULE DE BREVET EUROPEEN

(11) **EP 1 731 293 B1**
(45) Date de publication et mention de la délivrance du brevet: **26.11.2008**
(21) Numéro de dépôt: 06300555.7
(22) Date de dépôt: 02.06.2006
(51) Int. Cl.: B29D 11/00

(54) **Moule et procede de moulage, notamment par moulage par injection reactive, en particulier d'un element optique en materiau polymere**
Giessform und Giessverfahren, insbesondere für Reaktionsspritzgiessverfahren, insbesondere von einem optischen Gegenstand aus Kunststoff
Mould and moulding method, notably for reaction injection moulding, in particular of an optical element in polymer material

(30) Priorité: 06.06.2005 FR 0505741
(43) Date de publication de la demande: 13.12.2006
(73) Titulaire: ESSILOR INTERNATIONAL (Compagnie Générale d'Optique), 94220 Charenton le Pont (FR)
(72) Inventeur: Koscher, Matthieu, 94220, CHARENTON LE PONT (FR); Lesartre, Noémie, 94220, CHARENTON LE PONT (FR)
(74) Mandataire: Michelet, Alain

(56) Documents cités:
- EP-A- 1 504 869
- WO-A-90/05061
- US-A- 5 656 210

## Description

La présente invention concerne d'une manière générale un moule pour le moulage d'un élément optique, notamment une lentille ophtalmique, en un matériau polymère, thermo durcissable, et plus particulièrement par un procédé de moulage par injection réactive (RIM : Reaction Injection Molding).

Les éléments optiques sont le plus communément fabriqués par moulage et durcissement d'une composition polymérisable liquide dans un moule approprié.

Un procédé de mise en oeuvre d'une composition polymérisable, désigné par moulage par injection réactive (ou RIM), consiste à introduire dans la cavité ou empreinte de moulage d'un moule, une composition polymérisable liquide comprenant au moins deux réactifs réagissant l'un avec l'autre.

Le moulage par injection réactive est un procédé connu et, en particulier un procédé de moulage par injection réactive de lentille de contact est décrit dans le brevet US-5,656,210. WO/05 061 et EP 1,504,869 décrivent le moulage des lentilles.

Lors du moulage d'un élément optique, pour l'obtention d'un produit fini transparent et homogène dans sa structure, il est nécessaire d'avoir un temps de mélange combiné à un temps de remplissage qui soit inférieur au temps de gel de la composition polymérisable. Le moulage par injection réactive est un procédé dans lequel le temps de mélange est très rapide. De ce fait le RIM permet la mise en oeuvre de matériau polymère présentant des temps de gel court.

Cependant, dans le cadre du moulage d'éléments optiques tels que des lentilles ophtalmiques, des problèmes d'homogénéité et d'emprisonnement de bulles d'air au sein des produits moulés subsistent, du fait notamment à ce temps de mélange rapide.

La présente invention a pour objet de fournir un moule, pour un procédé de moulage par injection réactive (RIM), d'une composition liquide polymérisable permettant d'obtenir un élément optique moulé transparent, homogène, exempt de bulles d'air emprisonnées.

L'invention a encore pour objet un procédé de moulage d'une composition liquide polymérisable utilisant un moule tel que défini ci-dessus, notamment pour la fabrication d'éléments optiques, et en particulier de lentilles ophtalmiques.

Les buts ci-dessus sont atteints selon l'invention par les revendications 1, 27, 30.

Dans une réalisation préférée du moule de l'invention, l'axe longitudinal du pied de coulée est perpendiculaire au plan principal de l'empreinte de moulage.

L'empreinte de moulage peut présenter un profil plan, concave ou convexe. Dans le cas où l'empreinte de moulage présente un profil concave ou convexe, on entend par plan principal de l'empreinte de moulage, le plan passant par tous points de la circonférence de l'empreinte de moulage.

Au sens de l'invention les valeurs des différents angles sont définies selon le référentiel trigonométrique. Ainsi les valeurs des angles α, β, γ sont des valeurs positives d'angle, et les valeurs des angles α', β', γ' sont des valeurs négatives d'angle.

Le moule selon une forme de réalisation préférée de l'invention est encore défini par les caractéristiques suivantes prises isolément et en toutes leurs combinaisons techniquement réalisables :
- le raccord d'alimentation est réuni au seuil d'alimentation de l'empreinte de moulage par un congé de raccordement ;
- chacune des parties courbes tangentielles comprend une extrémité interne délimitée par la droite (D3, D3') et a une section droite transversale de géométrie trapézoïdale présentant une homothétie décroissante suivant une génératrice, dans sa largeur et dans sa hauteur, entre son extrémité interne et son extrémité externe ;
- la hauteur de la section droite trapézoïdale de chacune des parties courbes tangentielles à son extrémité externe représente 30% à 70%, de préférence 45% à 55%, de la hauteur de la section droite trapézoïdale à son extrémité interne ;
- la section droite trapézoïdale de chacune des parties courbes tangentielles a une largeur de sa base inférieure à son extrémité externe représentant 30% à 70%, de préférence 45% à 55%, de sa largeur à son extrémité interne ;
- une droite (D3, D3') passant par l'extrémité interne d'une partie courbe tangentielle et le centre géométrique (G) de l'empreinte de moulage fait un angle (β, β') de 5° à 45°, de préférence de 5° à 15° avec l'axe principal (XX) du moule ;
- chacune des parties courbes tangentielles est raccordée sur toute sa longueur au seuil d'alimentation de l'empreinte de moulage par une partie latérale du congé de raccordement ;
- le rapport entre la hauteur de la section droite de la partie latérale du congé de raccordement à l'extrémité interne de la partie courbe tangentielle et la hauteur de la section droite trapézoïdale de la partie courbe tangentielle à cette extrémité interne varie de 0,1 à 0,7, de préférence de 0,2 à 0,3 ;
- Le rapport entre la hauteur de la section droite de la partie latérale du congé de raccordement à l'extrémité externe de la partie courbe tangentielle et la hauteur de la section droite trapézoïdale de la partie courbe tangentielle à cette extrémité externe varie de 0,1 à 0,7, de préférence de 0,2 à 0,3.
- chaque canal latéral comporte une partie rectiligne se prolongeant depuis l'extrémité interne de la partie courbe tangentielle jusqu'au pied de coulée ;
- l'axe (D4, D4') de chacune des parties rectilignes de chaque canal latéral fait un angle (γ,γ') de 1° à 30°, préférentiellement de 1° à 10° avec l'axe principal (XX) du moule ;
- la section droite transversale de chaque partie rectiligne des canaux latéraux est de géométrie trapézoïdale ;
- le pied de coulée est réuni au raccord d'alimentation au moyen d'un seuil de coulée, de préférence de forme trapézoïdale ;
- Le rapport entre la hauteur de la section droite transversale des parties rectilignes au niveau des extrémités internes des parties courbes tangentielles et la hauteur de la section droite transversale des parties rectilignes des canaux latéraux au niveau du seuil de coulée varie de 0,5 à 0,8, et de préférence de 0,65 ± 0,02.
- le canal central d'alimentation est réuni au seuil d'alimentation par une partie centrale du congé de raccordement ;
- le canal central d'alimentation présente une homothétie décroissante selon sa hauteur du seuil de coulée au seuil d'alimentation ;
- Le rapport entre la hauteur de la section droite transversale du canal central d'alimentation au niveau d'alimentation et la hauteur de la section droite transversale du canal central d'alimentation au niveau du seuil de coulée varie de 0,5 à 0,8, et de préférence de 0,62 ± 0,02.
- l'aire d'une section droite transversale du raccord d'alimentation en un point quelconque de l'axe principal du moule et jusqu'à son extrémité interne varie au plus de 5%, et est constante préférentiellement ;
- le moule comprend au moins une première chambre d'évacuation communiquant avec l'empreinte de moulage ;
- la première chambre d'évacuation est dans une position diamétralement opposée au raccord d'alimentation ;
- le moule comprend optionnellement deux chambres d'évacuation supplémentaires communiquant avec l'empreinte de moulage et disposées de part et d'autre de la première chambre suivant un rayon de l'empreinte de moulage faisant un angle de 30° à 90° avec l'axe principal ;
- là où les chambres d'évacuation ont un volume représentant 10% à 40% du volume de l'empreinte de moulage, préférentiellement 25% ;
- là où les chambres d'évacuation ont une géométrie quelconque ; elles peuvent notamment être trapézoïdales ;
- L'empreinte de moulage est circulaire et présente un diamètre compris entre 40 et 90 mm, préférentiellement entre 50mm et 85mm.
- Le moule permet de mouler des éléments optiques présentant une épaisseur comprise entre 1 mm et 20mm, et présentant optionnellement un rayon de courbure compris entre 50mm et 300mm.

L'invention concerne également un procédé de moulage selon la revendication 27 en particulier par injection réactive (RIM), d'une pièce moulée telle qu'un élément optique, notamment une lentille ophtalmique, au moyen du moule décrit ci-dessus et qui comporte les étapes suivantes :
- mélange des polymères pour former une composition polymérisable liquide;
- injection de la composition polymérisable liquide ;
- remplissage du moule et compactage de la composition ;
- polymérisation, notamment thermique ;
- ouverture du moule ; et
- récupération de la pièce moulée.

Lorsque le moule comporte une chambre d'évacuation, le procédé peut en outre comporter une étape de compactage de l'air chassé et contenu dans la chambre d'évacuation (par injection d'un volume de composition supérieur au volume de l'empreinte de moulage), cette étape de compactage s'effectuant de façon concomitante à l'étape de remplissage de l'empreinte de moulage.

Pour le moulage d'un élément optique au moyen du moule selon l'invention, on peut utiliser toute composition polymérisable d'au moins un polymère de la famille des polyuréthanes, polythiouréthanes, polyuréthane-urées, époxy, épisulfures.

Le moule selon l'invention présente ainsi une géométrie qui permet notamment :
- d'obtenir un écoulement de type laminaire de la composition polymérisable ;
- de limiter toute zone de turbulence au sein de la composition polymérisable déjà présente dans l'empreinte du moulage ;
- d'éviter l'emprisonnement d'air.

Ces différents avantages du moule sont notamment obtenus grâce à l'injection de la composition polymérisable liquide du pied de coulée vers l'empreinte de moulage dans un plan orthogonal au plan de l'empreinte de moulage.

En plus de cette injection orthogonale par rapport au seuil d'alimentation, le moule se caractérise essentiellement par un système d'alimentation comportant un raccord d'alimentation en double tangentielle avec canal central de forme delta.

Cette géométrie du système d'alimentation, ainsi que le profil du congé de raccordement raccordant les doubles parties courbes tangentielles au seuil d'alimentation, la disposition des doubles parties courbes tangentielles par rapport à l'empreinte de moulage ainsi que la géométrie, la dimension et la configuration du raccord d'alimentation constituent des paramètres importants pour l'obtention d'un produit final acceptable.

L'utilisation d'un tel moule, notamment pour le moulage d'une lentille ophtalmique, permet d'obtenir un remplissage uniforme exempt de turbulence de l'empreinte de moulage. La demanderesse a constaté l'absence de formation de bulles d'air à l'intérieur de l'empreinte de moulage du moule, allié à une homogénéité de la composition polymérisable.

Dans la variante dans laquelle le moule comprend une ou plus chambre(s) d'évacuation, répartie(s) à la circonférence de l'empreinte de moulage, cette ou ces chambre(s) d'évacuation joue(nt) un double rôle :
- elle(s) permet(tent) d'une part d'évacuer l'air contenu dans l'empreinte de moulage pendant l'étape de remplissage ;
- elle(s) permet(tent) d'autre part le compactage de l'air et donc de la matière injectée, en fin d'étape de remplissage, par une injection d'une quantité additionnelle de composition polymérisable, puisqu'une partie de la composition polymérisable injectée peut pénétrer dans la ou les chambres d'évacuation.

La suite de la description se réfère aux figures annexées qui représentent respectivement :
- figure 1, une vue schématique en perspective d'un moule selon l'invention ;
- figure 2, une vue de dessus du moule de la figure 1 ;
- figures 3, 4 et 5, des représentations des sections droites transversales de différentes parties du raccord d'alimentation faites suivant les lignes AA, BB et CC, respectivement ;
- figures 6a et 6b, des représentations schématiques en vue de dessus et de la section droite longitudinale, respectivement, du canal central du raccord d'alimentation ; et
- figure 7, une vue schématique en perspective d'un canal latéral d'alimentation dans sa partie rectiligne du raccord d'alimentation.

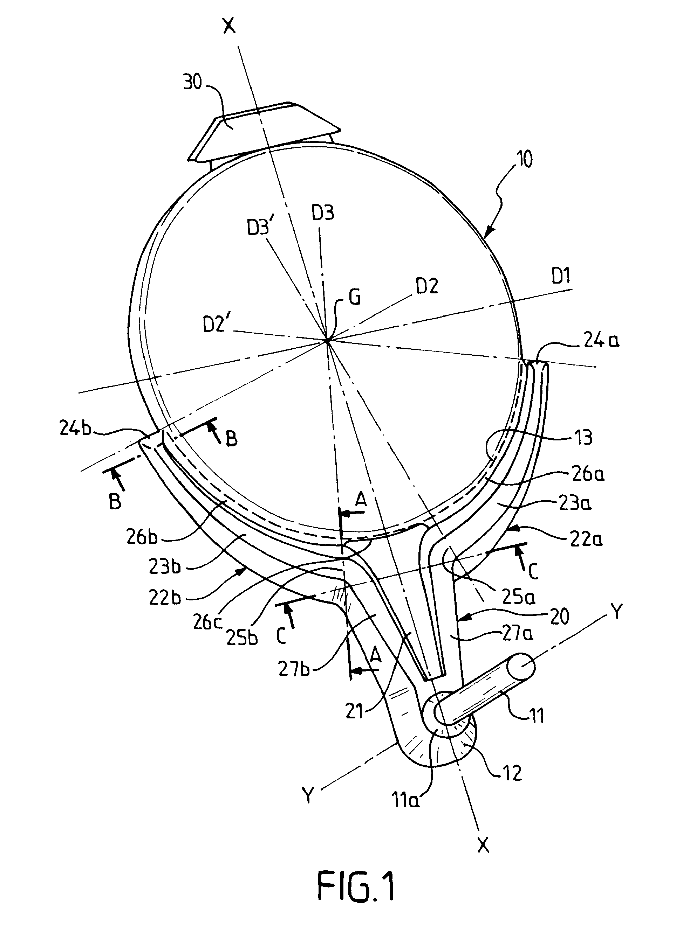

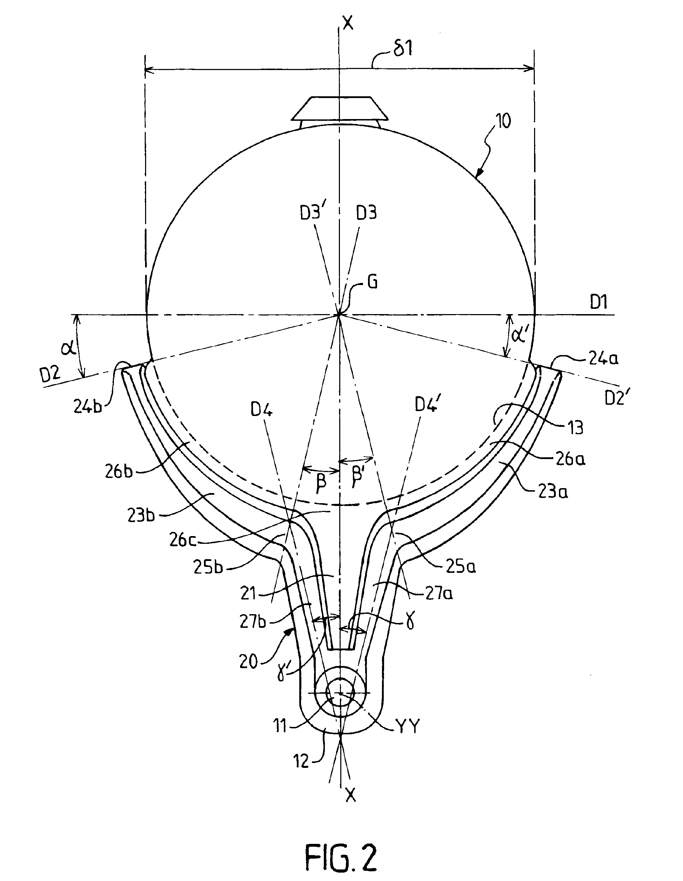

En se référant aux figures 1 et 2, on a représenté une réalisation d'un moule selon l'invention.

Le moule comprend une empreinte de moulage (ou cavité de moulage) 10, de forme générale circulaire ayant un centre géométrique G et dont la circonférence définie un plan principal de l'empreinte de moulage et également de l'ensemble du moule (plan de la feuille de la figure 2).

Le moule est relié à un pied de coulée 11 destiné à injecter une composition polymérisable liquide dans l'empreinte de moulage 10.

Le pied de coulée de forme générale cylindrique est raccordé au moule à une extrémité par une partie tronconique 11a à un seuil de coulée 12 qui, comme on le verra ci-après, a pour but de dévier le sens du flux de la composition polymérisable injectée. Le seuil de coulée 12 est mis en communication avec l'empreinte de moulage 10 par l'intermédiaire du raccord d'alimentation 20.

L'axe YY du pied de coulée 11 définit avec le centre géométrique G de l'empreinte de moulage 10 un plan orthogonal au plan principal de l'empreinte de moulage. De manière générale, cet axe YY du pied de coulée 11 fait un angle de 0° à 30°, de préférence 0° à 15°, avec une perpendiculaire au plan principal (XX,D1) de l'empreinte de moulage 10 et est de préférence perpendiculaire au plan de l'empreinte de moulage 10.

Le raccord d'alimentation 20, orienté suivant le plan principal de l'empreinte de moulage 10, est relié à la fois au seuil de coulée 12 et à l'empreinte de moulage 10 et met en communication le pied de coulée 11 avec le seuil d'alimentation 13 de l'empreinte de moulage 10.

Le raccord d'alimentation 20 comprend un canal central d'alimentation en forme de delta 21 s'évasant dans le plan principal de l'empreinte de moulage 10 en direction de celle-ci, et, disposé symétriquement par rapport à l'axe de symétrie (XX) du moule, de chaque côté du canal central 21, un canal latéral 22a, 22b comprenant une partie rectiligne 27a, 27b débutant au niveau du seuil de coulée 12 et se prolongeant en direction de l'empreinte de moulage 10 et une partie courbe 23a, 23b. Chacune des parties rectilignes 27a, 27b est réunie à une extrémité interne 25a, 25b délimitée respectivement par les droites D3 et D3' passant par le centre G. Chaque extrémité interne 25a, 25b se prolonge au sein de la partie courbe 23a, 23b du canal latéral 22a, 22b jusqu'à une extrémité externe 24a, 24b délimitée respectivement par les droites D2 et D2'. La prolongation de l'extrémité interne 25a, 25b à l'extrémité externe 24a, 24b est tangentielle au seuil d'alimentation 13 de l'empreinte de moulage 10, matérialisé par le trait interrompu court à la circonférence de l'empreinte de moulage.

Les extrémités externes 24a, 24b de chacune des parties courbes tangentielles 23a, 23b sont situées de telle sorte qu'une droite (D2, D2') tangente à l'extrémité externe 24a, 24b de chacune des parties courbes tangentielles 23a, 23b et passant par le centre géométrique G de l'empreinte de moulage 10 présente un angle (α, α') qui peut varier de 0° à 60°, de préférence de 10° à 30° et mieux de 12° à 18° avec une droite D1 passant par le centre géométrique G de l'empreinte de moulage 10 et perpendiculaire au plan de symétrie du moule (un axe principal XX). Sur la figure 2, l'angle α est de 15°, et α' est de-15°

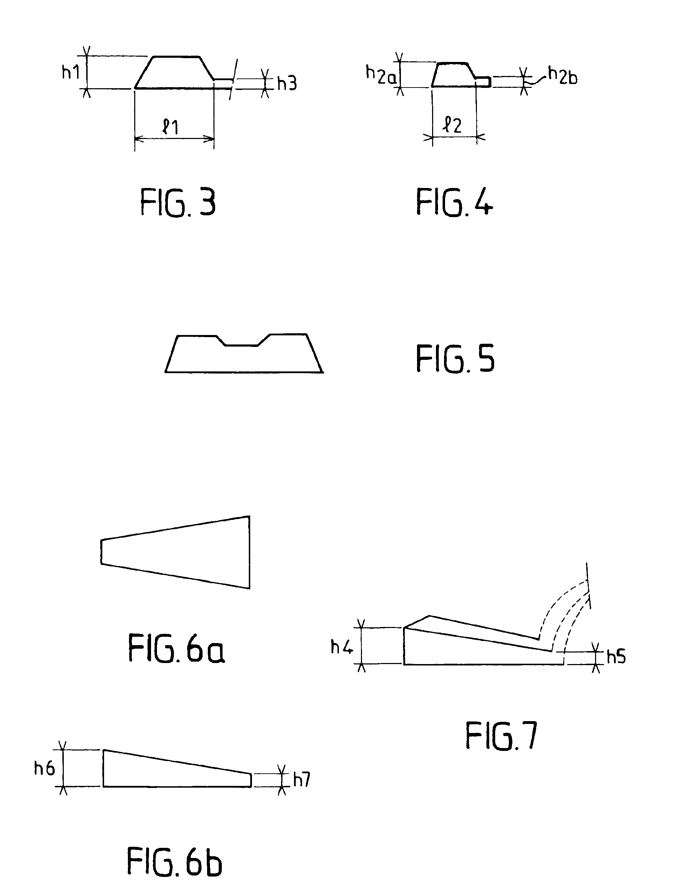

Comme le montre les figures 3 et 4, chacune des parties courbes tangentielles 23a, 23b a une section droite transversale de géométrie trapézoïdale présentant une homothétie décroissante suivant une génératrice, dans sa largeur et dans sa hauteur, entre son extrémité interne 25a, 25b et son extrémité externe 24a, 24b.

La hauteur h2 de la section droite trapézoïdale de chacune des parties courbes tangentielles 23a, 23b à son extrémité externe 24a, 24b représente 30% à 70%, de préférence 45% à 55%, de sa hauteur h1 à son extrémité interne 25a, 25b.

La section droite transversale trapézoïdale de chacune des parties courbes tangentielles 23a, 23b a une base inférieure d'une largeur I2 à son extrémité externe 24a, 24b représentant 30% à 70%, de préférence 45% à 55%, de la largeur I1 de sa base inférieure à son extrémité interne 25a, 25b.

Les parties courbes tangentielles 23a, 23b sont réunies sur toute leur longueur à l'empreinte de moulage 10 par une partie 26a, 26b d'un congé de raccordement qui les fait communiquer avec le seuil d'alimentation 13 de l'empreinte de moulage 10.

La hauteur h3 des parties 26a, 26b du congé de raccordement au niveau des extrémités internes 25a, 25b des parties courbes tangentielles 23a, 23b est dans un rapport qui varie de 0,1 à 0,7, de préférence de 0,2 à 0,3, avec la hauteur h1 de la section droite transversale des parties courbes tangentielles 23a, 23b à ces extrémités internes 25a, 25b.

La hauteur h2b des parties 26a, 26b du congé de raccordement au niveau des extrémités externes 24a, 24b des parties courbes tangentielles 23a, 23b, est dans un rapport qui varie de 0,1 à 0,7 de préférence 0,2 à 0,3, avec la hauteur h2a de la section droite transversale des parties courbes tangentielles 23a, 23b à ces extrémités externes 25a, 25b.

Comme le montrent les figures 5 et 7, la section droite transversale de chacune des parties rectilignes 27a, 27b est de géométrie trapézoïdale et présente une homothétie décroissante suivant sa hauteur depuis le seuil de coulée 12 jusqu'à l'extrémité interne 25a, 25b de la partie courbe tangentielle 23a, 23b. Le rapport entre la hauteur h5 de la section droite transversale d'une partie rectiligne 27a, 27b au niveau de l'extrémité interne 25a, 25b de la partie courbe tangentielle 23a, 23b et la hauteur h4 au niveau du seuil de coulée 12 varie de 0,5 à 0,8 et de préférence représente 0,65 ± 0,02. De préférence, également, la section droite transversale des parties rectilignes 27a, 27b présente une homothétie croissante suivant sa largeur depuis le seuil de coulée 12 jusqu'à l'extrémité interne 25a, 25b de la partie courbe tangentielle 23a, 23b.

En outre, l'axe longitudinal central passant respectivement par les droites (D4, D4') des parties rectilignes 27a, 27b fait un angle (γ, γ') avec l'axe principal XX du moule qui varie généralement de 1° à 30°, préférentiellement de 1° à 10°.

Le canal central 21 en forme de delta s'évasant en direction de l'empreinte de moulage 10 s'étend depuis le seuil de coulée 12 jusqu'au seuil d'alimentation 13 de l'empreinte de moulage 10, et est raccordé au seuil d'alimentation 13 de l'empreinte de moulage au moyen d'une partie centrale 26c du congé de raccordement 26.

Comme le montre la figure 6b, cette partie centrale 21 a une section droite transversale dont la hauteur diminue depuis le seuil de coulée 12 jusqu'à la partie centrale 26c du congé de raccordement 26.

Le rapport entre la hauteur h7 de la section droite transversale de la partie centrale 21 au niveau du congé de raccordement 26c et la hauteur h6 de la section droite transversale au niveau du seuil de coulée 12 varie de 0,5 et 0,8, et de préférence représente 0,62 ± 0,02. Il est bien évident qu'au niveau du seuil de coulée la hauteur h6 du canal central 21 est la même que la hauteur h4 des parties rectilignes 27a, 27b.

De manière générale, l'aire d'une section droite transversale du raccord d'alimentation 20 en un point quelconque de l'axe principal XX du moule jusqu'au congé de raccordement 26 au seuil d'alimentation 13 de l'empreinte de moulage est sensiblement constante, c'est-à-dire ne varie pas plus de 5%.

Préférentiellement dans le cadre de l'invention, les différents angles présents au niveau du moule seront arrondis afin de faciliter le flux de la matière polymérisable au sein du moule. Notamment les angles présents aux extrémités externes 24a, 24b, et aux extrémités internes 25a, 25b de chacune des parties courbes tangentielles 23a, 23b.

L'empreinte de moulage 10 est pourvue à sa périphérie d'au moins un moyen d'évacuation de l'air contenu initialement dans l'empreinte de moulage 10. Ce moyen d'évacuation peut être classiquement un évent disposé au sommet de l'empreinte de moulage 10 diamétralement opposé au pied de coulée 11.

De préférence dans la présente invention, le moyen de l'évacuation de l'air se compose d'au moins une chambre d'évacuation 30 communiquant avec l'empreinte de moulage 10 et située au sommet de l'empreinte de moulage 10 diamétralement opposé au pieds de coulée 11.

Le moule selon l'invention peut comporter des chambres d'évacuation supplémentaires analogue à la chambre d'évacuation 30 disposée à sa périphérie et en particulier deux autres chambres de part et d'autre de la première chambre 30, disposées suivant des rayons de l'empreinte de moulage 10 faisant un angle de 30° à 90° avec l'axe principal XX du moule, de préférence un angle de 60°.

La chambre d'évacuation 30 a, de préférence, un volume qui en général représente 10 à 40% du volume de l'empreinte de moulage, et préférentiellement 25% dudit volume.

Lors du moulage d'un élément optique avec le moule selon la présente invention, la composition polymérisable liquide est introduite perpendiculairement au plan principal de l'empreinte de moulage 10 par le pied de coulée 11. Le flux de la composition polymérisable liquide est ensuite acheminé jusqu'au seuil d'attaque 13 de l'empreinte de moulage par le raccord d'alimentation 20. La composition polymérisable liquide est introduite dans l'empreinte de moulage 10 par le raccord d'alimentation avec un écoulement de type laminaire, évitant toute zone de turbulence et tout emprisonnement d'air au sein de la matière polymérisable présente dans l'empreinte du moule.

En outre, l'air initialement présent dans l'empreinte 10 du moule est évacué dans la chambre d'évacuation 30.

En outre, l'emploi d'au moins une chambre d'évacuation permet un forçage de la composition liquide polymérisable injectée dans l'empreinte du moule du fait du possible compactage de l'air, en fin de remplissage, par injection d'une quantité surabondante de composition polymérisable liquide.

En général, le débit de composition liquide polymérisable du canal central 21 au niveau du seuil d'alimentation 13 de l'empreinte du moulage 10 varie de 10 grammes par seconde à 30 grammes par seconde.

Le moule une fois rempli peut être chauffé à une température appropriée pour réaliser la polymérisation ou achever la polymérisation de la composition polymérisable remplissant l'empreinte de moulage 10.

Après polymérisation, le moule est ouvert et on récupère l'ébauche de l'élément optique.

Au sens de l'invention, on entend notamment par élément optique les lentilles ophtalmiques et les lentilles pour instrument d'optique. Par lentille ophtalmique, on entend les lentilles s'adaptant notamment à une monture de lunettes, ayant pour fonction de protéger l'oeil et/ou de corriger la vue d'un porteur.

## Revendications

1. Moule pour le moulage, notamment par un procédé de moulage par injection réactive (RIM), d'un élément optique en un matériau polymère à partir d'une composition liquide polymérisable, comprenant une empreinte de moulage (10) de forme générale circulaire ayant un centre géométrique (G) et un plan principal (XX,D1), un pied de coulée (11) ayant un axe longitudinal (YY) et un raccord d'alimentation (20) qui met en communication le pied de coulée (11) avec un seuil d'alimentation (12) de l'empreinte de moulage, l'axe longitudinal (YY) du pied de coulée et le centre géométrique (G) de l'empreinte de moulage définissant un plan de symétrie (XX,YY) du moule orthogonal au plan principal de l'empreinte de moulage dont l'intersection avec ce même plan principal définit un axe principal (XX) du moule, l'axe longitudinal (YY) du pied de coulée (11) faisant un angle de 0 à 30°, de préférence de 0° à 15°, avec une perpendiculaire au plan principal (XX,D1) de l'empreinte de moulage (10), **caractérisé en ce que** le raccord d'alimentation (20) comprend un canal central d'alimentation en forme de delta (21) s'évasant, dans le plan principal de l'empreinte de moulage (10), en direction de l'empreinte de moulage (10) et, disposés symétriquement par rapport au plan de symétrie (XX,YY) du moule, de chaque côté du canal central, deux canaux latéraux d'alimentation (22a, 22b) comprenant chacun une partie courbe (23a, 23b) se prolongeant tangentiellement le long du seuil d'alimentation (13) de l'empreinte de moulage (10) jusqu'à une extrémité externe (24a, 24b) de telle sorte qu'une droite (D2, D2') passant par l'extrémité externe (24a, 24b) d'une partie courbe tangentielle (23a, 23b) et le centre géométrique (G) de l'empreinte de moulage (10) fait un angle (α, α') de 0° à 60°, de préférence 10° à 30° et mieux 12° à 18°, avec une droite (D1) passant par le centre géométrique (G) de l'empreinte de moulage (10) et perpendiculaire au plan de symétrie du moule.

2. Moule selon la revendication 1, **caractérisé en ce que** l'axe longitudinal (YY) du pied de coulée (11) est perpendiculaire au plan principal (XX,D1) de l'empreinte de moulage (10).

3. Moule selon l'une quelconque des revendications précédentes, **caractérisé en ce que** chacune des parties tangentielles (23a, 23b) comprend en outre une extrémité interne (25a, 25b) et a une section droite transversale de géométrie trapézoïdale présentant une homothétie décroissante suivant une génératrice, dans sa largeur et sa hauteur, entre son extrémité interne (25a, 25b) et son extrémité externe (24a, 24b).

4. Moule selon la revendication 3, **caractérisé en ce que** la hauteur (h2) de la section droite trapézoïdale transversale de chacune des parties courbes tangentielles (23a, 23b) à son extrémité externe représente 30% à 70%, de préférence 45% à 55%, de sa hauteur (h1) à son extrémité interne (25a, 25b).

5. Moule selon la revendication 3 ou 4, **caractérisé en ce que** la section droite de chacune des parties tangentielles (23a, 23b) a une largeur (I2) de sa base inférieure à son extrémité externe (24a, 24b) représentant 30% à 70%, de préférence 45% à 55%, de la largeur (I1) de sa base inférieure à son extrémité interne (25a, 25b).

6. Moule selon l'une quelconque des revendications 3 à 5, **caractérisé en ce qu'**une droite (D3, D3') passant par l'extrémité interne (25a, 25b) d'une partie courbe tangentielle (23a, 23b) et le centre géométrique (G) de l'empreinte de moulage (10) fait un angle (β, β') de 5° à 45°, de préférence de 5° à 15° avec l'axe principal (XX) du moule.

7. Moule selon l'une quelconque des revendications précédentes, **caractérisé en ce que** le raccord d'alimentation (20) est réuni au seuil d'alimentation (13) par un congé de raccordement (26).

8. Moule selon la revendication 7, **caractérisé en ce que** chacune des parties courbes tangentielles (23a, 23b) est raccordée sur toute sa longueur au seuil d'attaque (12) de l'empreinte de moulage (10) par une partie latérale (26a, 26b) du congé de raccordement (26).

9. Moule selon la revendication 8, **caractérisé en ce que** le rapport entre la hauteur (h3) de la partie latérale (26a, 26b) du congé de raccordement (26) à l'extrémité interne (25a, 25b) de la partie courbe tangentielle (23a, 23b) et la hauteur (h1) de la partie courbe tangentielle (23a, 23b) à cette extrémité interne (25a, 25b) varie de 0,1 à 0,7, de préférence de 0,2 à 0,3.

10. Moule selon la revendication 8 ou 9, **caractérisé en ce que** la hauteur (h2b) des parties latérales (26a, 26b) du congé de raccordement (26) au niveau des extrémités externes (24a, 24b) des parties courbes tangentielles (23a, 23b) avec la hauteur (h2a) de la section droite transversale des parties courbes tangentielles (23a, 23b) à ces extrémités externes (25a, 25b) varie de 0,1 à 0,7, de préférence 0,2 à 0,3.

11. Moule selon l'une quelconque des revendications 7 à 10, **caractérisé en ce que** chaque canal latéral (22a, 22b) comporte une partie rectiligne (27a, 27b) se prolongeant depuis l'extrémité interne (25a, 25b) de la partie courbe tangentielle (23a, 23b) jusqu'au pied de coulée (11).

12. Moule selon la revendication 11, **caractérisé en ce que** l'axe (D4, D4') de chacune des parties rectilignes (27a, 27b) fait un angle (γ,γ') de 1 ° à 30°, de préférence de 1° à 10°, avec l'axe principal (XX) du moule.

13. Moule selon la revendication 11 ou 12, **caractérisé en ce que** la section droite transversale de chaque partie rectiligne (27a, 27b) des canaux latéraux (22a, 22b) est de géométrie trapézoïdale.

14. Moule selon l'une quelconque des revendications 11 à 13, **caractérisé en ce que** le rapport entre la hauteur (h5) de la section droite transversale des parties rectilignes (27a, 27b) des canaux latéraux (22a, 22b) au niveau des extrémités internes (25a, 25b) des parties courbes tangentielles (23a, 23b) et la hauteur (h4) de la section droite transversale des parties rectilignes (27a, 27b) au niveau du seuil de coulée (12) varie de 0.5 à 0.8 et de préférence représente 0,65 ± 0,02.

15. Moule selon l'une quelconque des revendications 7 à 14, **caractérisé en ce que** le canal central d'alimentation (21) est relié par une partie centrale (26c) du congé d'alimentation (26) au seuil d'alimentation (13) de l'empreinte de moulage.

16. Moule selon l'une quelconque des revendications 7 à 15, **caractérisé en ce que** le rapport entre la hauteur (h7) de la section droite transversale de la partie centrale (21) au niveau du congé de raccordement (26c) et la hauteur (h6) de la section droite transversale au niveau du seuil de coulée (12) varie de 0,5 à 0,8, et de préférence représente 0,62 ± 0,02.

17. Moule selon l'une quelconque des revendications 7 à 16, **caractérisé en en ce que** l'aire d'une section droite transversale du raccord d'alimentation (20) en un point quelconque de l'axe principal (XX) du moule et jusqu'au congé d'alimentation (26) au seuil d'alimentation (13) ne varie pas de plus de 5%.

18. Moule selon la revendication 17 **caractérisé en en ce que** l'aire d'une section droite transversale du raccord d'alimentation (20) en un point quelconque de l'axe principal (XX) du moule et jusqu'au congé d'alimentation (26) au seuil d'alimentation (13) est constante.

19. Moule selon l'une quelconque des revendications 1 à 18, **caractérisé en ce qu'**il comprend au moins une première chambre d'évacuation (30) communiquant avec l'empreinte de moulage (10).

20. Moule selon la revendication 19, **caractérisé en ce que** la première chambre d'évacuation (30) est en une position diamétralement opposée au raccord d'alimentation (20).

21. Moule selon la revendication 19 ou 20, **caractérisé en ce qu'**il comprend deux autres chambres d'évacuation (30',30") communiquant avec l'empreinte de moulage (20) et disposées de part et d'autre de la première chambre (30) suivant un rayon de l'empreinte de moulage (10) faisant un angle de 30° à 90° avec l'axe principal (XX).

22. Moule selon l'une quelconque des revendications 20 à 21, **caractérisé en ce que** la chambre d'évacuation à un volume représentant 10% à 40% préférentiellement 25% du volume de l'empreinte de moulage (10).

23. Moule selon l'une quelconque des revendications précédentes, **caractérisé en ce que** le débit de composition liquide polymérisable du canal central (21) au niveau du seuil d'alimentation (13) de l'empreinte de moulage (10) est 10 à 30g/s.

24. Moule selon l'une quelconque des revendications précédentes, **caractérisé en ce que** l'empreinte de moulage est circulaire et présente un diamètre compris entre 40 et 90mm, de préférence entre 30mm et 85mm.

25. Moule selon l'une quelconque des revendications précédentes, **caractérisé en ce qu'**il permet de mouler des éléments optiques d'une épaisseur de 1 mm à 20 mm.

26. Moule selon l'une quelconque des revendications précédentes, **caractérisé en ce qu'**il permet de mouler des éléments optiques présentant un rayon de courbure compris entre 50mm et 300mmn.

27. Procédé de moulage par injection réactive (RIM) d'une pièce moulée au moyen d'un moule selon l'une quelconque des revendications précédentes, comportant les étapes suivantes:
- mélange des polymères pour former une composition polymérisable liquides,
- injection d'une composition polymérisable (liquide);
- remplissage du moule et compactage de la composition ;
- polymérisation, de préférence thermique;
- ouverture du moule, et
- récupération de la pièce moulée.

28. Procédé selon la revendication 27 dans lequel le moule comprend au moins une chambre d'évacuation, **caractérisé en ce qu'**il comprend en outre, une étape de compactage de l'air contenu dans la chambre d'évacuation, ladite étape de compactage s'effectuant de façon concomitante à l'étape de remplissage du moule.

29. Procédé selon la revendication 28, **caractérisé en ce que** la pièce moulée est un élément optique en particulier une lentille ophtalmique.

30. Utilisation d'un moule selon l'une quelconque des revendications 1 à 26 pour la fabrication d'un élément optique obtenu à partir d'une composition polymérisable liquide d'au moins un polymère de la famille des polyuréthanes, polythiouréthanes, polyuréthane-urées, époxy et épisulfures.

31. Utilisation selon la revendication 30 dans laquelle l'élément optique est une lentille ophtalmique.

## Claims

1. A mold for molding, in particular using a reaction injection molding method (RIM), an optical element made of a polymeric material from a liquid polymerizable composition, comprising a mold cavity (10) generally circular shaped having a geometrical center (G) and a main plane (XX,D1), a sprue base (11) with a longitudinal axis (YY) and a feed connection (20) that makes the sprue base (11) communicate with a feed sill (12) of the mold cavity, the longitudinal axis (YY) of the sprue base and the geometrical center (G) of the mold cavity defining a mold symmetry plane (XX,YY) orthogonal to the main plane of the mold cavity, the intersection of which with said main plane defines a mold main axis (XX), the longitudinal axis (YY) of the sprue base (11) forming together with a line perpendicular to the main plane (XX,D1) of the mold cavity (10) an angle from 0 to 30°, preferably from 0° to 15°, **characterized in that** the feed connection (20) comprises a delta-shaped, central feed channel (21) expanding, in the mold cavity main plane (10), towards the mold cavity (10) and two side feed channels (22a, 22b) arranged symmetrically to the mold symmetry plane (XX,YY) on either side of the central channel, each comprising a curved part (23a, 23b) that tangentially extends along the feed sill (13) of the mold cavity (10) up to an outer end (24a, 24b) so that a straight line (D2, D2') running through the outer end (24a, 24b) of a tangential curved part (23a, 23b) and the geometrical center (G) of the mold cavity (10) forms together with a straight line (D1) running through the geometrical center (G) of the mold cavity (10) and perpendicular to the mold symmetry plane an angle (α, α') ranging from 0° to 60°, preferably from 10° to 30° and more preferably from 12° to 18°.

2. A mold according to claim 1, **characterized in that** the longitudinal axis (YY) of the sprue base (11) is perpendicular to the main plane (XX,D1) of the mold cavity (10).

3. A mold according to anyone of the preceding claims, **characterized in that** each of the tangential parts (23a, 23b) additionally comprises an inner end (25a, 25b) and has a trapezoidal cross-section with a decreasing homothetic transformation as related to a generatrix, in its width and its height, between its inner end (25a, 25b) and its outer end (24a, 24b).

4. A mold according to claim 3, **characterized in that** height (h2) of the trapezoidal cross-section for each of the tangential curved parts (23a, 23b) at its outer end comprises from 30% to 70%, preferably from 45% to 55%, of its height (h1) at its inner end (25a, 25b).

5. A mold according to claim 3 or 4, **characterized in that** the cross- section of each of the tangential parts (23a, 23b) has a lower base width (12) at its outer end (24a, 24b) comprising from 30% to 70%, preferably from 45% to 55%, of the lower base width (I1) at its inner end (25a, 25b).

6. A mold according to anyone of claims 3 to 5, **characterized in that** a straight line (D3, D3') running through the inner end (25a, 25b) of a tangential curved part (23a, 23b) and the geometrical center (G) of the mold cavity (10) together with the mold main axis (XX) forms an angle (β, β') ranging from 5° to 45°, preferably from 5° to 15°.

7. A mold according to anyone of the preceding claims, **characterized in that** the feed connection (20) is connected to the feed sill (13) by means of a fillet (26).

8. A mold according to claim 7, **characterized in that** each of the tangential curved parts (23a, 23b) is connected along its all length to the feed sill (12) of the mold cavity (10) through of a side part (26a, 26b) of the fillet (26).

9. A mold according to claim 8, **characterized in that** the ratio between height (h3) of the side part (26a, 26b) of the fillet (26) at the inner end (25a, 25b) of the tangential curved part (23a, 23b) and height (h1) of the tangential curved part (23a, 23b) at this inner end (25a, 25b) varies from 0.1 to 0.7, preferably from 0.2 to 0.3.

10. Mold according to claim 8 or 9, **characterized in that** height (h2b) of the side parts (26a, 26b) of the fillet (26) at the outer ends (24a, 24b) of the tangential curved parts (23a, 23b) together with height (h2a) of the cross-section of the tangential curved parts (23a, 23b) at these outer ends (25a, 25b) varies from 0.1 to 0.7, preferably from 0.2 to 0.3.

11. A mold according to anyone of claims 7 to 10, **characterized in that** each side channel (22a, 22b) comprises a straight part (27a, 27b) extending from the inner end (25a, 25b) of the tangential curved part (23a, 23b) up to the sprue base (11).

12. A mold according to claim 11, **characterized in that** the axis (D4, D4') of each of the straight parts (27a, 27b) together with the mold main axis (XX) forms an angle (γ,γ') ranging from 1° to 30°, preferably from 1° to 10°.

13. A mold according to claim 11 or 12, **characterized in that** the cross-section of each straight part (27a, 27b) of the side channels (22a, 22b) is geometrically trapezoidal.

14. A mold according to anyone of claims 11 to 13, **characterized in that** the ratio between the cross-section height (h5) of the straight parts (27a, 27b) of the side channels (22a, 22b) at the inner ends (25a, 25b) of the tangential curved parts (23a, 23b) and the cross-section height (h4) of the straight parts (27a, 27b) at the casting sill level (12) varies from 0.5 to 0.8 and is preferably 0.65 ± 0.02.

15. A mold according to anyone of claims 7 to 14, **characterized in that** the central feed channel (21) is connected through a central part (26c) of the fillet (26) to the feed sill (13) of the mold cavity.

16. A mold according to anyone of claims 7 to 15, **characterized in that** the ratio between the cross-section height (h7) of the central part (21) at the fillet (26c) and the cross-section height (h6) at the casting sill level (12) varies from 0.5 to 0.8, and preferably is 0.62 ± 0.02.

17. A mold according to anyone of claims 7 to 16, **characterized in that** the straight cross-sectional area of the feed connection (20) in any point of the mold main axis (XX) and up to the fillet (26) to the feed sill (13) does not vary by more than 5%.

18. A mold according to claim 17, **characterized in that** the cross-section area of the feed connection (20) in any point of the mold main axis (XX) and up to the fillet (26) to the feed sill (13) is constant.

19. A mold according to anyone of claims 1 to 18, **characterized in that** it comprises at least one first outlet chamber (30) that communicates with the mold cavity (10).

20. A mold according to claim 19, **characterized in that** the first outlet chamber (30) is located completely opposite the feed connection (20).

21. A mold according to claim 19 or 20, **characterized in that** it comprises two additional outlet chambers (30',30") that communicate with the mold cavity (20) and that are located on either side of the first chamber (30) according to a mold cavity radius (10) forming with the main axis (XX) an angle ranging from 30° to 90°.

22. A mold according to claim 20 or 21, **characterized in that** the outlet chamber has a volume comprising from 10% to 40%, preferably 25% of the mold cavity (10) volume.

23. A mold according to anyone of the preceding claims, **characterized in that** the flow rate of the liquid polymerizable composition of the central channel (21) at the feed sill (13) of the mold cavity (10) ranges from 10 to 30 g/s.

24. A mold according to anyone of the preceding claims, **characterized in that** the mold cavity is circular and has a diameter ranging from 40 to 90 mm, preferably from 30 mm to 85 mm.

25. A mold according to anyone of the preceding claims, **characterized in that** it makes it possible to mold optical elements from 1 mm to 20 mm thick.

26. A mold according to anyone of the preceding claims, **characterized in that** it makes it possible to mold optical elements having a bend radius ranging from 50 mm to 300 mm.

27. A reaction injection molding method (RIM) of a molded body by means of a mold according to anyone of the preceding claims, comprising following steps:
- mixing the polymers so as to form a liquid polymerizable composition,
- injecting the (liquid) polymerizable composition;
- filling the mold and compacting the composition;
- polymerizing, preferably through thermal initiated polymerization;
- opening the mold, and
- discharging the molded body.

28. A method according to claim 27, wherein the mold comprises at least one outlet chamber, **characterized in that** it comprises in addition a compacting step for the air present in the outlet chamber, said compacting step being carried out concomitantly to the mold filling step.

29. A method according to claim 28, **characterized in that** the molded body is an optical element, especially an ophthalmic lens.

30. The use of a mold according to anyone of claims 1 to 26 for making an optical element from a liquid polymerizable composition comprising at least one polymer of the polyurethane, polythiourethane, polyurethane-urea, epoxy and episulfide families.

31. The use according to claim 30, wherein the optical element is an ophthalmic lens.

## Patentansprüche

1. Form zum Giessen, insbesondere mittels eines reaktiven Spritzgussverfahrens (RIM), eines optischen Elementes aus polymerem Material ausgehend von einer flüssigen polymerisierbaren Zusammensetzung, umfassend einen Formabdruck (10) von generell kreisförmiger Form mit einer geometrischen Mitte (G) und einer Hauptebene (XX, G1), einen Anguss (11) mit einer Längsachse (YY) und einem Versorgungsanschluss (20), der den Anguss (11) mit einer Versorgungsschwelle (12) des Gussabdruckes in Verbindung setzt, wobei die Längsachse (YY) des Angusses und die geometrischen Mitte (G) des Gussabdruckes eine orthogonal bezüglich der Hauptebene des Gussabdruckes verlaufende Symmetrieebene (XX,YY) der Form definieren, deren Schnitt mit derselben Hauptebene eine Hauptachse (XX) der Form definiert, wobei die Längsachse (YY) des Angusses (11) einen Winkel bildet von 0 bis 30° bevorzugt von 0° bis 15° bezüglich einer Normalen zur Hauptebene (X, D1) des Gussabdruckes (10), **dadurch gekennzeichnet, dass** der Versorgungsanschluss (20) einen zentralen Versorgungskanal umfasst, in Deltaform (21) sich in der Hauptebene des Gussabdruckes (10) in Richtung des Gussabdruckes (10) aufweitend, und symmetrisch angeordnet mit Bezug auf die Symmetrieebene (XX, YY) der Form, an jeder Seite des zentralen Kanals zwei laterale Versorgungskanäle (22a, 22b), umfassend jeweils einen gekrümmten Abschnitt (23a, 23b), sich tangentialwärts fortsetzend entlang der Versorgungsschwelle (13) des Gussabdruckes (10) bis hin zu einem Außenende (24a, 24b), derart, dass eine Gerade (D2, D2'), die durch das äußere Ende (24a, 24b) eines gekrümmten tangentiellen Abschnittes (23a, 23b) und die geometrische Mitte (G) des Gussabdruckes (10) verläuft, einen Winkel (α, α') bildet, von 0° bis 60° bevorzugt von 10° bis 30° und insbesondere bevorzugt von 12° bis 18° bezüglich einer Geraden (D1), die durch die geometrische Mitte (G) des Gussabdruckes (10) verläuft und senkrecht zur Symmetrieebene der Form ist.

2. Form nach Anspruch 1, **dadurch gekennzeichnet, dass** die Längsachse (YY) des Angusses (11) senkrecht verläuft zur Hauptebene (XX, D1) des Gussabdruckes (10).

3. Form nach einem der vorangegangenen Ansprüche, **dadurch gekennzeichnet, dass** jeder der tangentiellen Abschnitte (23a, 23b) ferner ein inneres Ende (25a, 25b) umfasst, sowie einen Querschnitt von trapezoidartiger Geometrie, aufweisend eine abnehmende Homothetie gemäß einer Erzeugenden bezüglich der Breite und der Höhe davon zwischen dem internen Ende (25a, 25b) und dem externen Ende (24a, 24b) davon.

4. Form nach Anspruch 3, **dadurch gekennzeichnet, dass** die Höhe (h2) des trapezoidförmigen Querschnittes in jedem der tangentiellen gekrümmten Abschnitte (23a, 23b) an dem externen Ende davon 30% bis 70%, bevorzugt 45% bis 55% der Höhe (h1) davon an dem internen Ende (25a, 25b) ausmacht.

5. Form nach Anspruch 3 oder 4, **dadurch gekennzeichnet, dass** der Querschnitt von jedem der tangentiellen Abschnitte (23a, 23b) eine Breite (12) an der unteren Basis an seinem externen Ende (24a, 24b) hat, die 30% bis 70%, bevorzugt 45% bis 55% von der Breite (11) seiner unteren Basis an seinem inneren Ende (25a, 25b) ausmacht.

6. Form nach einem der Ansprüche 3 bis 5, **dadurch gekennzeichnet, dass** eine Gerade (D3, D3'), die durch das interne Ende (25a, 25b) eines tangentiellen gekrümmten Abschnittes (23a, 23b) und die geometrische Mitte (G) des Gussabdruckes (10) verläuft mit der Hauptachse (XX) der Form einen Winkel (β, β') bildet von 5° bis 45°, bevorzugt von 5° bis 15°.

7. Form nach einem der vorangegangenen Ansprüche, **dadurch gekennzeichnet, dass** der Versorgungsanschluss (20) mit der Versorgungsschwelle (13) vereinigt ist über ein Anschlusselement (26).

8. Form nach Anspruch 7, **dadurch gekennzeichnet, dass** jeder der tangentiellen, gekrümmten Abschnitte (23a, 23b) angeschlossen ist bezüglich der gesamten Länge davon an der Beaufschlagungsschwelle (12) des Gussabdruckes (10) mittels eines lateralen Abschnittes (26a, 26b) des Anschlusselementes (26).

9. Form nach Anspruch 8, **dadurch gekennzeichnet, dass** die Beziehung zwischen der Höhe (h3) des lateralen Abschnittes (26a, 26b) des Anschlusselementes (26) am internen oder inneren Ende (25a, 25B) des tangentiellen, gekrümmten Abschnittes (23a, 23b) und der Höhe (h1) des tangentiellen, gekrümmten Abschnittes (23a, 23b) an dem internen Ende (25a, 25b) von 0,1 bis 0,7 bevorzugt von 0,2 bis 0,3 variiert.

10. Form nach Anspruch 8 oder 9, **dadurch gekennzeichnet, dass** die Höhe (h2b) der lateralen Abschnitte (26a, 26b) des Anschlusselementes (26) auf dem Niveau der externen oder äußeren Enden (24a, 24b) der tangentiellen, gekrümmten Abschnitte (23a, 23b) mit der Höhe (h2a) des Querschnittes der tangentiellen, gekrümmten Abschnitte (23a, 23b) an dem externen oder äußeren Enden (25a, 25b) von 0,1 bis 0,7, bevorzugt von 0,2 bis 0,3 variiert.

11. Form nach einem der Ansprüche 7 bis 10, **dadurch gekennzeichnet, dass** jeder Lateralkanal (22a, 22b) einen geradlinigen Abschnitt (27a, 27b) umfasst, sich fortsetzend, ausgehend von dem inneren oder internen Ende (25a, 25b) des tangentiellen, gekrümmten Abschnittes (23a, 23b) bis hin zum Anguss (11).

12. Form nach Anspruch 11, **dadurch gekennzeichnet, dass** die Achse (D4. D4') von jedem der geradlinigen Abschnitte (27a, 27b) einen Winkel (γ,γ') von 1° bis 30°, bevorzugt von 1° bis 10° mit der Hauptachse (XX) der Form.

13. Form nach Anspruch 11 oder 12, **dadurch gekennzeichnet, dass** der Querschnitt von jedem geradlinigen Abschnitt (27a, 27b) der lateralen Kanäle (22a, 22b) von trapezoidartiger Geometrie ist.

14. Form nach einem der Ansprüche 11 bis 13, **dadurch gekennzeichnet, dass** die Beziehung zwischen der Höhe (h5) des Querschnittes der geradlinigen Abschnitte (27a, 27b) der lateralen Kanäle (22a, 22b) auf dem Niveau der inneren oder internen Enden (25a, 25b) der gekrümmten tangentiellen Abschnitte (23a, 23b) und der Höhe (h4) des Querschnittes der geradlinigen Abschnitte (27a, 27b) auf dem Niveau der Eingussschwelle (12) variiert von 0,5 bis 0,8 und bevorzugt 0,65 +/- 0,02 ausmacht.

15. Form nach einem der Ansprüche 7 bis 14, **dadurch gekennzeichnet, dass** der zentrale oder mittlere Versorgungskanal (21) verbunden oder angeschlossen ist über einen mittleren oder zentralen Abschnitt (26c) des Anschluss- bzw. Versorgungselementes (26), und zwar bezüglich der Versorgungsschwelle (13) des Gussabdruckes.

16. Form nach einem der Ansprüche 7 bis 15, **dadurch gekennzeichnet, dass** die Beziehung zwischen der Höhe (h7) des Querschnittes des zentralen oder mittleren Abschnittes (21) auf dem Niveau des Anschlusselementes (26c) und der Höhe (h6) des Querschnittes auf dem Niveau der Angussschwelle (12) variiert von 0,5 bis 0,8 und bevorzugt wird 0,62 +/- 0,02 ausmacht.

17. Form nach einem der Ansprüche 7 bis 16, **dadurch gekennzeichnet, dass** die Fläche eines Querschnittes des Versorgungsanschlusses (20) an einem beliebigen Punkt der Hauptachse (XX) der Form und bis zum Versorgungselement (26) an der Versorgungsschwelle (13) um nicht mehr als 5% variiert.

18. Form nach Anspruch 17, **dadurch gekennzeichnet, dass** die Fläche eines Querschnittes des Versorgungsanschlusses (20) an einen beliebigen Punkt der Hauptachse (XX) der Form bis hin zum Versorgungselement (26) an der Versorgungsschwelle (13) konstant ist.

19. Form nach einem der Ansprüche 1 bis 18, **dadurch gekennzeichnet, dass** sie zumindest eine erste Evakuierungskammer (30) umfasst, in Verbindung stehend mit dem Gussabdruck bzw. Hohlraum (10).

20. Form nach Anspruch (19), **dadurch gekennzeichnet, dass** die erste Evakuierungskammer (30) an einer diametral gegenüberstehenden Position befindlich ist bezüglich des Versorgungsabschlusses (20).

21. Form nach Anspruch 19 oder 20, **dadurch gekennzeichnet, dass** sie zwei weitere Evakuierungskammern (30', 30") umfasst, in Verbindung stehend mit dem Gussabdruck (20) und befindlich diesseits und jenseits der ersten Kammer (30) entsprechend einem Radius des Gussabdruckes (10), einen Winkel ausbildend von 30° bis 90° bezüglich der Hauptachse (XX).

22. Form nach einem der Ansprüche 20 bis 21, **dadurch gekennzeichnet, dass** die Evakuierungskammer ein Volumen hat, welches 10 bis 40%, bevorzugt 45% des Volumens des Gussabdruckes bzw. Hohlraumes (10) ausmacht.

23. Form nach einem der vorangegangenen Ansprüche, **dadurch gekennzeichnet, dass** der Durchsatz an polymerisierbarer, flüssiger Zusammensetzung des zentralen Kanals (21) auf dem Niveau der Versorgungsschwelle (13) des Gussabdruckes (10) 10 bis 30g pro Sekunde ausmacht.

24. Form nach einem der vorangegangenen Ansprüche, **dadurch gekennzeichnet, dass** der Guss oder Formabdruck bzw. Hohlraum kreisförmig ist und einen Durchmesser aufweist enthalten zwischen 40 und 90mm, bevorzugt zwischen 30mm und 85mm.

25. Form nach einem der vorangegangenen Ansprüche, **dadurch gekennzeichnet, dass** sie es ermöglicht, optische Elemente bei einer Dicke von 1mm bis 20mm zu formen bzw. zu gießen.

26. Form nach einem der vorangegangenen Ansprüche, **dadurch gekennzeichnet, dass** sie es ermöglicht optische Elemente zu formen oder zu gießen, die einen Krümmungsradius aufweisen enthalten zwischen 50mm und 300mm.

27. Verfahren zum reaktiven Spritzgießen (RIM) eines Gussteiles mittels einer Form nach einem der vorangegangenen Ansprüche, umfassend die nachfolgenden Schritte:
- Mischen von Polymeren zum Bilden einer polymerisierbaren flüssigen Zusammensetzung,
- Einspritzen einer (flüssigen) polymerisierbaren Zusammensetzung;
- Befüllen der Form und Verdichten der Zusammensetzung;
- Polymerisation, bevorzugt thermisch;
- Öffnen der Form, und
- Gewinnen des geformten bzw. gegossenen Teiles.

28. Verfahren nach Anspruch 27, bei welchem die Form zumindest eine Evakuierungskammer umfasst, **dadurch gekennzeichnet, dass** es ferner einen Schritt der Verdichtung der Luft, enthalten in der Evakuierungskammer umfasst, wobei der Verdichtungsschritt begleitend erfolgt zu dem Schritt des Befüllens der Form.

29. Verfahren nach Anspruch 28, **dadurch gekennzeichnet, dass** das geformte bzw. gegossene Teil ein optisches Element, insbesondere eine ophthalmische Linse ist.

30. Verwendung einer Form nach einem der Ansprüche 1 bis 26 zur Herstellung eines optischen Elementes, erhalten ausgehend von einer flüssigen polymerisierbaren Zusammensetzung zumindest eines Polymers der Familie der Polyurethane, der Polythiouretane, der Harnsäure-Polyurethane, der Epoxy und der Episulfide.

31. Verwendung nach Anspruch 30, bei welcher das optische Element eine ophthalmische Linse ist.
